# NEUE EUROPÄISCHE PATENTSCHRIFT

(11) **EP 2 430 878 B2**
(45) Veröffentlichungstag und Bekanntmachung des Hinweises auf die Entscheidung über den Einspruch: **12.11.2025**
(45) Hinweis auf die Patenterteilung: 20.07.2022
(21) Anmeldenummer: 10722586.4
(22) Anmeldetag: 04.05.2010
(51) Int. Cl.: H05B 3/14, H05B 3/24, F24D 13/02

(54) **ELEKTRISCHE FLÄCHENHEIZEINRICHTUNG UND VERFAHREN SOWIE BAUSTOFF ZU DEREN HERSTELLUNG**
ELECTRICAL PANEL HEATING DEVICE AND METHOD AND MATERIAL FOR THE PRODUCTION THEREOF
DISPOSITIF DE CHAUFFAGE ÉLECTRIQUE DE GRANDE SURFACE ET PROCÉDÉ AINSI QUE MATÉRIAU POUR SA FABRICATION

(30) Priorität: 11.05.2009 DE 102009020669
(43) Veröffentlichungstag der Anmeldung: 21.03.2012
(73) Patentinhaber: Zimmerer, Wilhelm, 8041 Strassen (LU); Zimmerer, Laura, 8041 Strassen (LU)
(72) Erfinder: Zimmerer, Laura, L-8017 Strassen (LU); Zimmerer, Wilhelm, L-8017 Strassen (LU)
(74) Vertreter: Küchler, Stefan
(86) Internationale Anmeldenummer: PCT/EP2010/002714
(87) Internationale Veröffentlichungsnummer: WO 2010/130353

(56) Entgegenhaltungen:
- EP-A2- 0 204 672
- EP-A2- 0 204 672
- WO-A2-97/15171
- WO-A2-97/15171
- CN-A- 101 333 096
- CN-A- 101 353 239
- DE-A1- 2 428 233
- GB-A- 1 454 394
- GB-A- 1 553 497
- US-A- 4 301 356
- J.M.R. DOTTO ET AL.: "Influence of silica fume addition on concretes physical properties and on corrosion behaviour of reinforcement bars", CEMENT & CONCRETE COMPOSITES, vol. 26, 2004, pages 31 - 39, XP027409412, DOI: 10.1016/S0958-9465(02)00120-8

## Beschreibung

Die Erfindung betrifft eine elektrische Flächenheizeinrichtung sowie ein Verfahren zu deren Herstellung, wobei aus einer Baustoffmischung, bestehend aus wenigstens einem anorganischen Bindemittel, bspw. Zement und/oder Gips, aus wenigstens einem elektrisch nicht leitenden Zuschlagstoff, bspw. Sand und/oder Gesteinsmehl, und aus wenigstens einem weiteren Zuschlagstoff aus elektrisch leitfähigen Partikeln, bspw. Ferrosilizium oder Kohlenstofffasern und/oder -späne, ggf. auch aus Recyclingmaterial von Carbonfasermatten, ein in flüssigem oder pastösem Zustand verarbeitbarer Baustoff angemischt wird.

In vielen Gebäuden, insbesondere Altbauten mit großer Zimmerhöhe, ist es oftmals schwierig, einen Raum auf eine angenehme Temperatur zu erwärmen, da - insbesondere in südlichen Ländern - entweder überhaupt keine Heizeinrichtung vorhanden ist, oder diese an kälteren Wintertagen nicht ausreichend ist.

Bekannte Heizvorrichtungen haben in der Regel einen hohen Anschaffungspreis, sind aufwendig zu montieren und erfordern mitunter bauliche Maßnahmen. Bekannte Flächenheizvorrichtungen sind beispielsweise dafür eingerichtet, unter dem Verputz einer Wand angeordnet zu werden und sind zum Nachrüsten in einem fertiggestellten Gebäude eher ungeeignet.

Viele elektrische Heizvorrichtungen weisen überdies wasser- bzw. dampfdichte Folien oder Schichten auf, zwischen denen sich die eigentliche Heizeinrichtung befindet. Solche Heizungen verhindern die notwendige Wasserdampfdiffusion durch Wände und andere Bauteile. In Zeiten, in denen solche Heizungen nicht betrieben werden, z.B. im Sommer, entstehen dann feuchte Stellen. An solchen feuchten Wänden, Decken und Böden entsteht dann Schimmelpilzbefall (Aspergillus Fumigatus).

Die EP 0 204 672 A2 offenbart ein elektrisches Heizelement, das einen Kern aufweist aus einem elektrisch leitenden Material, welches an eine Wechselspannung angeschlossen ist, sowie eine den Kern umgebende Hülle aus einem undurchlässigen Beton aus Zement, Sand, Kaliumsilikat und Graphitpulver. Das solchermaßen hergestellte Heizelement kann die Gestalt eines Radiators haben, wie er z.B. unterhalb eines Fensters montiert wird. Zu diesem Zweck kann er im Bereich seiner Oberkante eine nach hinten überstehende Nase aufweisen mit einem hakenförmigen Querschnitt, womit ein derartiger Radiator-Heizkörper an Winkeln oder Klammern einhängbar ist, welche z.B. unterhalb des Fensters an der Wand fixiert werden, und hängt sodann in einem Abstand vor der Wand. Damit wird die eigentliche Wand nicht wirklich vor Schimmelpilzbefall geschützt.

Die WO 97/15171 A1 offenbart eine Gipskartonplatte zum Innenausbau eines Gebäudes, die an ihrer vorderen Flachseite eine als elektrische Widerstandsheizung betreibbare Heizschicht aufweist sowie an ihrer rückwärtigen Flachseite eine Wärmedämmschicht. Diese mit Heiz- und Wärmedämmschicht ausgerüsteten Gipskartonplatten werden zum Einsatzort transportiert und dort installiert. Infolge der rückwärtigen Wärmedämmschicht ist auch hier die Heizschicht von dem tragenden Untergrund - bspw. einer Hauswand - abgehoben und kann dieselbe nicht vor Schimmelpilzbefall schützen.

Die CN 101 333 096 A offenbart einen leitfähigen Beton und umfasst 100 Gew.-Portionen Zement, 50-300 Gew.-Portionen Sand sowie 1-30 Gew.-Portionen Graphit. Der Zement, der Sand und das Nanographitpulver werden gleichmäßig gemischt, gegossen und geformt und dann für 24 Stunden bei Raumtemperatur und einer Luftfeuchtigkeit von 90 % zur Kondensation aufbewahrt, bevor der Einbau des geformten Teils auf einer Baustelle möglich ist. Den primären Einsatzfall bildet die Abschirmung von elektromagnetischen Wellen; die solchermaßen hergestellten Bauteile können jedoch auch als elektrische Heizelemente verwendet werden. Solche in Formen gegossenen Heizelemente sind jedoch wiederum nicht integraler Bestandteil eine Wand, sondern werden daran montiert, wobei sich Abstände nicht vermeiden lassen, welche einen späteren Schimmelpilzbefall zulassen.

Aus diesen Nachteilen des beschriebenen Standes der Technik resultiert das die Erfindung initiierende Problem, eine elektrische Flächenheizeinrichtung zu schaffen, die einfach und kostengünstig herzustellen und zu montieren ist und insbesondere auch zum Nachrüsten in einem fertigen Gebäude geeignet ist.

Die Lösung dieses Problems gelingt im Rahmen eines Verfahrens zur Herstellung einer elektrischen Flächenheizeinrichtung dadurch, dass die leitfähigen Partikel mit den anderen Bestandteilen der Baustoffmischung vollständig vermischt sind und dadurch homogen innerhalb der Baustoffmischung verteilt sind, aus der durch Hinzugabe von Wasser ein in flüssigem oder pastösem Zustand verarbeitbarer Baustoff angemacht wird, und dass dieser Baustoff zu einem flächenhaften Produkt (3) verarbeitet wird, welches mit niederohmigen Kontaktierungen (4) zum Einspeisen eines flächenhaft verteilten Stroms versehen wird, wobei der flüssige oder pastöse Baustoff vor Ort an einer Begrenzungsfläche eines Raums eines Gebäudes als festem, tragfähigen Untergrund aushärtet, nämlich in Form eines Estrichs, Putzes, Mörtels oder Klebemittels.

Indem die elektrisch leitfähigen Partikel durch eine möglichst vollständige Vermischung mit den anderen Bestandteilen des Baustoffs im Wesentlichen homogen innerhalb desselben verteilt sind, so weist die Heizeinrichtung einen im Wesentlichen konstanten elektrischen Flächenwiderstand auf und eignet sich daher für einen über die Fläche homogenen Flächenstrom. Das Ergebnis ist eine homogen über die betreffende Fläche verteilte Heizleistung. Es gibt also weder "kalte" noch "heiße" Stellen, sondern einen etwa gleichförmig erwärmten Flächenbelag. Eine weitere Maßnahme für einen gleichförmig erwärmten Flächenbelag ist, den erfindungsgemäßen "Heizmörtel", d.h., den erfindungsgemäßen Baustoff, mit einer möglichst gleichmäßigen Stärke auf dem Untergrund aufzutragen. Dies läßt sich besonders gut erreichen miteiner Zahntraufel oder ähnlichem Verarbeitungsgerät. Ein ebener Untergrund ist optimal, er führt zu einer gleichmäßigen Stärke der Heizmörtelschicht. Die niederohmigen Kontaktierungen haben einen niedrigeren elektrischen Widerstand als der Heizmörtel selbst und verteilen daher den zugeführten Strom auf die zwischen zwei derartigen Kontaktierungen liegende Fläche.

Ein erfindungsgemäßer, zur Herstellung einer elektrischen Flächenheizeinrichtung verwendeter Baustoff zeichnet sich aus durch wenigstens ein anorganisches Bindemittel, bspw. Zement und/oder Gips, wenigstens einen elektrisch nicht leitenden Zuschlagstoff, bspw. Sand und/oder Gesteinsmehl, und wenigstens einen weiteren Zuschlagstoff aus elektrisch leitfähigen Partikeln, bspw. Kohlenstofffasern und/oder -spänen.

Da die elektrisch leitfähigen Partikel durch die Matrix zumindest teilweise voneinander getrennt sind, hat sich die Verwendung einer Matrix mit wesentlichen, anorganischen Bestandteilen bewährt, die im Allgemeinen porös sind und daher eher feuchtigkeitsaufnehmend als Kunststoffe. Daraus resultiert im Allgemeinen eine deutlich bessere elektrische Leitfähigkeit derartiger anorganischer bzw. mineralischer Baustoffe. Zementstein oder Beton hat im Algemeinen einen elektrischen Widerstand p etwa zwischen 0,5 * 10³ Ω*cm und 5,0 * 10³ Ω*cm, sofern er nicht ofengetrocknet ist. Kunststoffe, d.h. Polymere, werden dagegen normalerweise als Isolatoren eingestuft, mit einer elektrischen Leitfähigkeit von mehr als 10¹² Ω*cm. Aus diesem Grund ist ein anorganisches Bindemittel im Allgemeinen einem organischen Bindemittel vorzuziehen. Organische Bindemittel sollten daher im Rahmen der Erfindung allenfalls hilfsweise, d.h. ergänzend zu einem anorganischen Haupt-Bindemittel verwendet werden.

Darüber hinaus ist es grundsätzlich auch möglich, dem Baustoff Flugasche, Hochofenschlacke und/oder Silikastaub, d.h. Kieselsäurestaub bzw. Microsilica, beizufügen. Es wurde jedoch gefunden, dass diese Beimischungen den spezifischen elektrischen Widerstand einer anorganischen Bindemittelmatrix mehr oder weniger deutlich erhöhen, so dass auf diese Zuschlagstoffe eher verzichtet werden sollte, d.h., deren Anteile, vorzugsweise sogar deren Gesamtbestandteil sollte(n) bevorzugt unterhalb von 1 Vol.-% liegen.

Der zuvor beschriebene Baustoff ist aus einer Baustoffmischung mit wenigstens einem anorganischen Bindemittel, bspw. Zement und/oder Gips, mit wenigstens einem elektrisch nicht leitenden Zuschlagstoff, bspw. Sand und/oder Gesteinsmehl, und mit wenigstens einem weiteren Zuschlagstoff aus elektrisch leitfähigen Partikeln, bspw. Kohlenstofffasern und/oder -späne, durch Hinzugabe von Wasser zu einem in flüssigem oder pastösem Zustand verarbeitbaren Baustoff anrührbar, zu einem flächenhaften Produkt verarbeitbar und härtet sodann zur fertigen, elektrischen Flächenheizung aus.

Im Allgemeinen sind mineralische Baustoffe hydraulisch, d.h., sie binden unter Wasseraufnahme ab. Dazu ist es erforderlich, dieselben zuvor mit Wasser anzurühren. Bei nicht hydraulischen Baustoffen erfolgt das Abbinden durch Verdunsten des hinzugegebenen Wasserbestandteils.

Die erfindungsgemäße elektrische Flächenheizeinrichtung wird hergestellt nach dem eingangs beschriebenen Verfahren und/oder unter Verwendung des zuvor beschriebenen Baustoffs, unter Aushärten eines zu einer flüssigen oder pastösen Substanz angerührten Baustoffs, der wenigstens ein anorganisches Bindemittel, bspw. Zement und/oder Gips enthält, ferner wenigstens einen elektrisch nicht leitenden Zuschlagstoff, bspw. Sand und/oder Gesteinsmehl, sowie wenigstens einen weiteren Zuschlagstoff aus elektrisch leitfähigen Partikeln, bspw. Kohlenstofffasern und/oder -spänen, bevorzugt in einer flachen, nicht tragenden Form, beispielsweise mit einer Stärke von 10 mm oder weniger, vorzugsweise mit einer Stärke von 8 mm oder weniger, insbesondere mit einer Stärke von 6 mm oder weniger.

Ein erfindungsgemäßer Baustoff kann verwendet werden als Mauermörtel, Mauersteinkleber, Verputzmörtel, Armierungsmörtel, Estrichmörtel, Estrichbeton, Verlegemörtel, Ankermörtel, Verfüllmörtel. Er eignet sich darüber hinaus auch als Edelputz, Silikatputz. Weitere Anwendungsbeispiele umfassen Injektionsmörtel sowie Fliesen-, Kunststein- und Natursteinkleber; er eignet sich sogar für Lehmputze.

Die erfindungsgemäße Heizeinrichtung wird an einer Begrenzungsfläche eines Raums installiert, bspw. an einer oder mehreren Wänden, dem Fußboden oder der Decke. Die Wärmeabgabe in den betreffenden Raum erfolgt über die jenem zugewandte Oberfläche. Für eine solche Wärmeübertragung ist eine große Schichtdicke nicht erforderlich.

Zur Schaffung eines möglichst homogenen, flächenhaften Stroms ist die durch Aushärten eines zunächst flüssigen oder pastösen Baustoffs fertiggestellte, elektrische Flächenheizeinrichtung ferner mit Kontaktierungen versehen ist zum Einspeisen eines Flächenstroms. Im Allgemeinen wird der Stromfluss in Richtung dieser Fläche erfolgen; im Rahmen der Erfindung wäre es aber auch denkbar, einen Stromfluss quer oder gar lotrecht zu der betreffenden Fläche vorzusehen. Die Richtung des Stromflusses wird dabei vorgegeben durch die Anordnung der Kontaktierungen. Für einen Stromfluss innerhalb der Fläche müssen beide Kontaktierungen ebenfalls innerhalb der betreffenden Fläche angeordnet werden; für einen Stromfluss etwa lotrecht dazu müssen die beiden Kontaktierungen etwa lotrecht gegenüber der betreffenden Fläche gegeneinander versetzt sein. Die Kontaktierungsstreifen können aber auch nicht parallel zueinander verlaufen, sondern sich gleichmäßig verengen oder erweitern. Je nachdem entsteht ein stärkerer oder weniger starker Stromfluss, so dass sich an den betreffenden Stellen eine höhere oder niedrigere Wärmeerzeugung pro Flächeneinheit ergibt.

Zweckmäßigerweise sind die leitfähigen Partikel innerhalb der fertigen Heizeinrichtung in einer Matrix mit einem anorganischen Bindemittel eingelagert, insbesondere in einer mineralischen Matrix, z.B. aus Zement oder Gips. Allerdings können als weitere Bindemittel-Bestandteile auch organische Substanzen beigefügt sein, bspw. ein Polymer, z.B. Kunstharz.

Darüber hinaus enthält der erfindungsgemäße Baustoff Zuschlagstoffe, bspw. Sand oder Gesteinsmehl. Der primäre Zweck derartiger Zuschlagstoffe ist die Reduzierung der Bindemittel-Matrix, wodurch überflüssige Kosten eingespart werden können.

Ferner können dem erfindungsgemäßen Baustoff auch Zusatzmittel beigefügt sein, bspw. Cellulose, Fasern, etc. Solche Zusatzmittel sollen im Gegensatz zu den oben erwähnten Zuschlagstoffen bestimmte Funktionen erfüllen, bspw. einer Steigerung der Festigkeit herbeiführen wie Faserarmierungen, die thermische Leitfähigkeit zu senken, bspw. mittels Luftporenbildnern oder Leichtzuschlagstoffen, den Körperschall zu reduzieren, was bspw. durch Schwerzuschlagstoffe erreicht wird, ferner die Dichte und/oder die Wasserdichtigkeit zu verbessern, die Festigkeit, die Verarbeitbarkeit und/oder Verarbeitungszeit, etc.

Vorteilhafterweise enthalten die leitfähigen Partikel Kohlenstoff in einer seiner technischen Modifikationen, insbesondere in Form von Graphit, Kohlenstofffasern oder -spänen, Glaskohlenstoff, Graphen, Aktivkohle, Ruß, Fullerene, Fullerit, Kohlenstoffnanoröhren, Kohlenstoffnanoknospen (kovalent aneinander gebundene Moleküle aus Kohlenstoffnanoröhren und Fullerenen, sog. "Carbon nanobuds"), oder Kohlenstoffschaum. Amorpher Kohlenstoff kommt grundsätzlich auch in Betracht, wenngleich dessen spezifischer elektrischer Widerstand größer ist als bspw. derjenige der Graphitmodifikation, welcher etwa bei 0,5 * 10⁻³ Ω*cm liegt. Kohlenstofffasern haben dagegen einen etwas höheren spezifischen elektrischen Widerstand in der Größenordnung von etwa 5,0 * 10⁻³ Ω*cm. Fullerene, die in Form von Fullerit oder in Verbindung mit Kohlenstoffnanoröhren auftreten, haben auch einen sehr geringen spezifischen Widerstand.

Vorteilhafterweise handelt es sich bei den in den erfindungsgemäßen Baustoff eingemischten und sodann in der Matrix der Mörtelschicht oder in eine Beschichtung eingelagerten elektrisch leitfähigen Partikel um Kohlenstoffpulver, -fasern, -körnungen, -späne, oder durch eingelegte Graphitminen oder -stifte, oder um Siliziumpartikel, insbesondere dotiertes Silizium aber auch andere Halbleiter.

Als besonders günstig erwiesen hat sich z.B. Ruß, Koks oder ein damit gefülltes Polymer wie Papier, welches dann als elektrisch leitfähige, elektrisch Widerstand leistende Papierschnipsel in eine Mörtelmatrix eingebaut ist. Aus einem solchen Mörtel kann eine Gipspapierfaserheizplatte hergestellt werden, oder dieser kann in oder auf den Gipskern einer Gipskartonplatte ein- oder aufgebracht werden. Denkbar wäre jedoch auch die Verwendung anderer Materialien, sofern gewährleistet ist, dass die Mörtelschicht einen im Wesentlichen konstanten elektrischen Flächenwiderstand aufweist, der als Heizwiderstand geeignet ist. So ist beispielsweise auch die Verwendung einer Vielzahl von Graphitminen oder -stiften mit geeigneter elektrischer Kontaktierung denkbar. Denkbar ist auch die Verwendung elektrisch leitfähiger Polymere, Polytiophene, Polyacetylene oder auch Metallpulver wie Gold, Silber, Zink. Diese Edelmetalle können z.B. auf geblähte Perlite, Glasschaum oder Mikrohohlglaskugeln aufgebracht sein.

Eine weitere Alternative besteht darin, andere Leiter oder Halbleiter zu verwenden, welche einen kleineren spezifischen elektrischen Widerstand aufweisen als die Matrix des betreffenden Baustoffs, vorzugsweise als eine Zementmatrix od. dgl. anorganische Bindemittelmatrix, insbesondere also einen spezifischen elektrischen Widerstand von weniger als 0,5 * 10³ Ω*cm aufweisen, also bspw. leitfähige Partikel aus Silizium, insbesondere dotiertem Silizium.

Die Form der verwendeten leitfähigen Partikel kann vielfältig sein. Im Allgemeinen dürfte jedoch einer länglichen bis langgestreckten Geometrie, also Spänen oder Fasern, der Vorzug zu geben sein, weil dieselben eine größere Oberfläche aufweisen als etwa kugelförmige Teilchen gleichen Volumens. Daher ist die Wahrscheinlichkeit einer gegenseitigen Berührung mit elektrischer Kontaktgabe erheblich größer als bei etwa kugelförmigen Teilchen.

Die Verwendung der oben genannten Materialien hat sich als besonders vorteilhaft für die Herstellung einer erfindungsgemäßen Flächenheizeinrichtung erwiesen. Denkbar wäre jedoch auch die Verwendung anderer Materialien, sofern gewährleistet ist, dass die Heizeinrichtung einen im Wesentlichen konstanten elektrischen Flächenwiderstand aufweist, welcher als Heizwiderstand geeignet ist. So ist beispielsweise auch die Verwendung einer Vielzahl von Graphitminen oder -stiften mit geeigneter elektrischer Kontaktierung denkbar.

Die leitfähigen Substanzen können wahlweise in reiner Form beigegeben werden, oder aber in oder auf ein Trägermaterial appliziertem Zustand, bspw. in Form eines bedruckten oder mit der leitfähigen Substanz getränkten oder anderweitig vermischten Papiers od. dgl.

Als anorganische Bindemittel für die Mörtelheizschicht kommen im Wesentlichen in Betracht Zement und zementartige Materialien wie z.B. Mikrozemente und Tonerdeschmelzzemente, aber auch Gipse, Anhydrit, hydraulische und hochhydraulische Kalke, Magnesit, Ton und Lehm, sowie Silikate, Kaliwasserglas und alle anderen mögliche Abmischungen aus derartigen Substanzen.

Insbesondere für Beschichtungen, insbesondere für Streichmassen und pastöse Spachtelputze, kommen auch (zusätzliche) organische Bindemittel in Betracht, wie z.B. Silikonharz, Acrylharz, insbesondere Dispersionen.

Als Zuschlagsstoffe für die Mörtelheizschicht eignen sich insbesondere Sande, Kies, Splitte, Marmorsande, Gips- und Anhydritgestein, Schlacken oder Bims.

Als verarbeitungsverbessernde Zusatzmittel für die Mörtel- und Beschichtungsmassen für die Heizschicht sind z.B. Abbindeverzögerer zu empfehlen, wie z.B. Fruchtsäuren, aber auch Abbindebeschleuniger, Dispersionen, Harnstoffe, Silikonharze, Acrylharze, Latex, Cellulose, Luftporenbildner, Haft- und Klebematerialien und Verflüssiger sowie Verdickungsmittel.

Als Leichtzuschläge werden Perlite, Bims, Blähton, Polystyrol, Schaumglas, Mikrohohlglaskugeln bevorzugt eingebaut.

Bei der Wahl der Abmischung für die Mörtel- oder Beschichtungsmaterialien zur Herstellung der Heizschichten ist es vorteilhaft, die Bindemittel, Zuschlagsstoffe, Zusatzmittel und Leichtzuschläge so zu wählen, dass eine schnelle Austrocknung erreicht wird, z.B. eine Abmischung von Aluminatzement und Gipsmaterial, oder ein thmermische Nacherhärtung eintritt, z.B. durch Zugabe von Polyurethan Harzen, was sich gut bewerkstelligen lässt. Bei der Wahl des elektrischen leitenden, HeizWiderstand leistenden Materials in Art und Menge ist zu beachten, dass einerseits eine ausreichende Heizleistung erreicht wird und andererseits eine Überhitzung der Heizschicht vermieden wird. In die Mörtelheizschicht kann zu den anorganischen Bindemitteln auch, wie zuvor beschrieben, ein Polyurethan Harz eingemischt werden, das seine Verfestigung z.B. bei 60° C erreicht. Die Heizschicht wird einmalig auf diese Temperatur gebracht und wird später auf die vorgesehene Betriebstemperatur z.B. 30° C zurückgefahren. Zweckmäßigerweise hat die Mörtelheizschicht eine Stärke von 0,02 mm (als Anstrich, Beschichtung) bis 15 mm (z.B. Putz, Gipskartonplatten).

Bei der Wahl des Heizwiderstandes der Heizeinrichtung ist zu beachten, dass einerseits eine ausreichende Heizleistung zu erzielen ist, und andererseits, eine Überhitzung der Heizeinrichtung vermieden werden sollte. Vorteilhafterweise weist die Heizeinrichtung im ausgehärteten Zustand des erfindungsgemäßen Baustoffs einen elektrischen Flächenwiderstand R von 3 Ω bis 9 Ω auf. Besonders vorteilhaft ist ein Flächenwiderstand der Heizeinrichtung von 5 Ω bis 7 Ω, insbesondere von ungefähr 6 Ω. Der spezifische Flächenwiderstand R einer Widerstandsschicht der Dicke d mit einem isotropen spezifischen elektrischen Widerstand p beträgt R = p/d. Ein elektrischer Flächenwiderstand R = 6 Ω beispielsweise erfordert also bei einer Stärke d von 0,5 cm einen elektrischen spezifischen Widerstand p des ausgehärteten Baustoffs von etwa 3,0 Ω*cm. Dieser Wert liegt etwa bei einem Hundertstel des spezifischen Widerstands einer anorganischen Bindemittelmatrix, jedoch etwa bei dem Tausendfachen des spezifischen Widerstandes einer kohlenstoffhaltigen Substanz. Daher kann der VolumenAnteil V_{I} der leitfähigen Partikel in dem ausgehärteten Baustoff - und damit auch in der trockenen Baustoffmischung vor deren Anrühren - erheblich kleiner gewählt werden als derjenige der übrigen Bestandteile zusammengenommen, also - bezogen auf das Gesamtvolumen des ausgehärteten Baustoffs: V_{I} ≤ 50 Vol.-%, beispielsweise V_{I} ≤ 30 Vol.-%, vorzugsweise V_{I} < 20 Vol.-%, insbesondere V_{I} ≤ 15 Vol.-%. Andererseits empfiehlt die Erfindung, den Anteil V_{I} der leitfähigen Partikel in dem ausgehärteten Baustoff - und damit auch in der trockenen Baustoffmischung vor deren Anrühren - größer zu wählen als 1 Vol.-%, beispielsweise größer als 2 Vol.-%, vorzugsweise größer als 5 Vol.-%, insbesondere größer als 10 Vol.-%.

Bei einer quadratischen Schicht mit Elektroden über die gesamte Länge zweier gegenüberliegender Kanten stimmt der Widerstand R = U / I mit dem Flächenwiderstand R überein, wobei die Kantenlänge des Quadrates beliebig ist. Bei einem Abstand der Kontaktierungen von 100 cm und einer Stärke d von 0,5 cm und also folglich einem Flächenwiderstand R von 6 Ω ergibt sich also bei einer angelegten Spannung von 24 V ein Stromfluss I entlang einer Kantenlänge der Kontaktierungen von 100 cm von I = U / R = 24 V / 6 Ω = 4 A. Also wird pro m² eine maximale Leistung P von P = U * I = 24 V * 4 A ≈ 100 W. Bei einer etwa zimmerhohen Heizfläche mit einer Breite von etwa 5 m ergibt sich bspw. eine Heizfläche F von 2,0 m * 5,0 m = 10,0 m². Eine derartige, erfindungsgemäße Heizeinrichtung mit einer Gesamtfläche von bspw. 10 m² liefert also eine maximale Heizleistung P von 1 kW. Eine Heizleistung P in dieser Größenordnung dürfte im Allgemeinen zur Beheizung eines Raums völlig ausreichend sein. Daher empfiehlt die Erfindung, dass der erfindungsgemäße Baustoff im abgebundenen, ausgetrockneten Zustand einen spezifischen elektrischen Widerstand p von wenigstens 10⁻³ Ω*cm aufweist, vorzugsweise einen spezifischen elektrischen Widerstand p von wenigstens 10⁻² Ω*cm, insbesondere einen spezifischen elektrischen Widerstand p von 10⁻¹ Ω*cm oder mehr, oder gar einen spezifischen elektrischen Widerstand p von 1 Ω*cm oder mehr, und/oder einen spezifischen elektrischen Widerstand p von höchstens 10⁴ Ω*cm, beispielsweise einen spezifischen elektrischen Widerstand p von allenfalls 10³ Ω*cm, im Besonderen einen spezifischen elektrischen Widerstand p von 10² Ω*cm oder weniger, oder gar einen spezifischen elektrischen Widerstand p von 10 Ω*cm oder weniger.

Zweckmäßigerweise weist die Heizeinrichtung mindestens zwei niederohmige Streifen als Anschlusselektroden für die elektrischen Anschlüsse auf, welche bevorzugt entlang zweier, einander gegenüberliegender Enden bzw. Kanten der Heizeinrichtung angeordnet sind, um so einen über die Fläche der Heizeinrichtung möglichst homogenen Stromfluss zu erreichen. Zu diesem Zweck sollten die elektrisch leitenden Anschlüsse eine um wenigstens das Zehnfache höhere elektrische Leitfähigkeit aufweisen als die ausgehärtete Bausubstanz selbst, beispielsweise eine um wenigstens das Zwanzigfache höhere elektrische Leitfähigkeit als die ausgehärtete Bausubstanz selbst, vorzugsweise eine um wenigstens das Fünfzigfache höhere elektrische Leitfähigkeit als die ausgehärtete Bausubstanz selbst, insbesondere eine um wenigstens das Hundertfache höhere elektrische Leitfähigkeit als die ausgehärtete Bausubstanz selbst. Kupfer beispielsweise hat einen spezifischen elektrischen Widerstand p von p = 1,78 * 10⁻⁸ Ω*cm bzw. eine elektrische Leitfähigkeit von etwa 0,57 * 10⁸ (Ω*cm)⁻¹; diese Leitfähigkeit ist sogar mehr als das Tausendfache größer ist als die elektrische Leitfähigkeit der ausgehärteten Bausubstanz, vorzugsweise mehr als zehntausendmal größer, insbesondere mehr als hunderttausendmal größer, ja sogar mehr als das millionenfache derselben. Solchenfalls kann der elektrische Widerstand im Bereich der Kontaktierung getrost vernachlässigt werden, und die gesamte Leistung wird innerhalb der ausgehärteten Bausubstanz in Wärme umgewandelt.

Vorteilhafterweise sind die Anschlusselektroden z.B. Metallstreifen; die aufgedruckt oder aufgedampft sind. Zweckmäßigerweise enthalten die niederohmigen Streifen ein Metall oder eine Metalllegierung. Besonders vorteilhaft sind Kupferstreifen als Anschlusselektroden, da Kupfer eine sehr hohe elektrische Leitfähigkeit besitzt. Denkbar sind jedoch auch elektrische Anschlüsse bzw. Anschlusselektroden aus einem anderen Material, sofern dieses eine hohe elektrische Leitfähigkeit aufweist und zum Kontaktieren des elektrisch leitfähigen Materials der erfindungsgemäßen Heizeinrichtung geeignet ist, beispielsweise einen niedrigen Übergangswiderstand aufweisen.

Die Anschlusselektroden bzw. Kontaktierungen können z.B. aus reinen Metallstreifen bestehen; sie können aber auch auf einem Trägermaterial appliziert sein, bspw. auf einem Papier oder einer Folie.

Vorteilhaft ist die Heizeinrichtung dafür eingerichtet, zum Betrieb an eine Niederspannung von bis zu 60 V angeschlossen zu werden. Besonders bevorzugt ist eine Niederspannung von ungefähr 12 V bis 48 V. Wenn beispielsweise die Heizeinrichtung an eine Netzspannung angeschlossen werden soll, z.B. an eine 230 V-Wechselspannung, so ist zweckmäßigerweise ein (Trenn-) Transformator dazwischen zu schalten, welcher die Heizeinrichtung galvanisch von dem speisenden Netz trennt. Durch die Verwendung einer Niederspannung ist selbst eine direkte Berührung der an eine Niederspannungsquelle angeschlossenen Heizeinrichtung ungefährlich.

Vorteilhafterweise kann die Heizeinrichtung an eine Photovoltaikanlage angeschlossen werden, welche in der Regel geeignete Niederspannungen liefert.

Insbesondere bei feuchten Wänden oder Decken ist eine elektrische Isolierung der Heizeinrichtung gegenüber der Wand oder Decke zweckmäßig, um eine einwandfreie Funktion der Heizeinrichtung sicherzustellen.

Hierfür kann die Heizeinrichtung ferner eine elektrische isolierende Schicht oder Lage aufweisen, welche zwischen der Heizeinrichtung und der Wand oder Decke angeordnet ist.

In einem weiteren, besonders bevorzugten Ausführungsbeispiel ist die Heizeinrichtung dafür ausgebildet, auf einem Boden eines Gebäudes unter einem Bodenbelag angeordnet zu werden.

Weitere Merkmale, Eigenschaften, Vorteile und Wirkungen auf der Basis der Erfindung ergeben sich aus der folgenden Beschreibung bevorzugter Ausführungsformen der Erfindung, sowie aus der Zeichnung. Hierbei zeigt:
- Fig. 1: den schematisch und stark vereinfachten Aufbau eines Teils einer Heizeinrichtung gemäß eines bevorzugten Ausführungsbeispiels der vorliegenden Erfindung;
- Fig. 2: ein Ausführungsbeispiel, welches nicht Gegenstand der vorliegenden Erfindung ist, in einem schematischen Querschnitt;
- Fig. 3: ein weiteres, bevorzugtes Ausführungsbeispiel der vorliegenden Erfindung in einem schematischen Querschnitt;
- Fig. 4: ein weiter abgewandeltes Ausführungsbeispiel, welches nicht Gegenstand der vorliegenden Erfindung ist, in einem schematischen Querschnitt;
- Fig. 5: ein abermals abgewandeltes Ausführungsbeispiel, welches nicht Gegenstand der vorliegenden Erfindung ist, in einem schematischen Querschnitt;
- Fig. 6: ein Kunststoff-Röhrengeflecht zur Aufnahme des Injektionsbaustoffes, welches nicht Gegenstand der vorliegenden Erfindung ist;
- Fig. 7: Rahmen- und Zargenteile mit Heizmörtelbaustoff, welche nicht Gegenstand der vorliegenden Erfindung sind;
- Fig. 8: ein Formteil mit Heizmörtelbaustoff, welches nicht Gegenstand der vorliegenden Erfindung ist;
- Fig. 9: ein Glasschaumteil mit Heizmörtelbaustoff, welches nicht Gegenstand der vorliegenden Erfindung ist;
- Fig. 10: eine weitere Ausführungsform eines Glasschaumteils mit Heizmörtelbaustoff, welches nicht Gegenstand der vorliegenden Erfindung ist;
- Fig. 11: eine andere Ausführungsform eines Glasschaumteils mit Heizmörtelbaustoff, welches nicht Gegenstand der vorliegenden Erfindung ist;
- Fig. 12: eine Gipsfaserplatte als Heizplatte, welche nicht Gegenstand der vorliegenden Erfindung ist;
- Fig. 13: eine Gipsfaserplatte mit applizierter Heizschicht, welche nicht Gegenstand der vorliegenden Erfindung ist;
- Fig. 14: eine Gipskartonplatte, welche nicht Gegenstand der vorliegenden Erfindung ist;
- Fig. 15: eine modifizierte Ausführungsform der Gipskartonplatte, welche nicht Gegenstand der vorliegenden Erfindung ist;
- Fig. 16: eine Flächenheizplatte mit einem Baustoff mit strukturierter Oberfläche, welche nicht Gegenstand der vorliegenden Erfindung ist;
- Fig. 17: eine andere Flächenheizplatte mit einem Baustoff mit strukturierter Oberfläche, welche nicht Gegenstand der vorliegenden Erfindung ist;
- Fig. 18: eine abgewandelte Flächenheizplatte mit einem Baustoff mit strukturierter Oberfläche, welche nicht Gegenstand der vorliegenden Erfindung ist;
- Fig. 19: eine Flächenheizplatte, mit Abstandshalter befestigt, welche nicht Gegenstand der vorliegenden Erfindung ist;
- Fig. 20: eine Flächenheizplatte mit integrierten Hohlräumen, welche nicht Gegenstand der vorliegenden Erfindung ist;
- Fig. 21: eine Flächenheizplatte, mit Abstandshalter befestigt, welche nicht Gegenstand der vorliegenden Erfindung ist;
- Fig. 22: eine nochmals abgewandelte Ausführungsform, welche nicht Gegenstand der vorliegenden Erfindung ist;
- Fig. 23: eine noch weiter abgewandelte Ausführungsform der Erfindung als Fußbodenbeschichtung;
- Fig. 24: eine veränderte Ausführungsform der Erfindung mit zwei Flächenheizschichten und einer daran angeschlossenen Lampe; sowie
- Fig. 25: eine weiter modifizierte Ausführungsform der Erfindung mit einer Metallschicht als Gegenpol zur eigentlichen Flächenheizschicht.

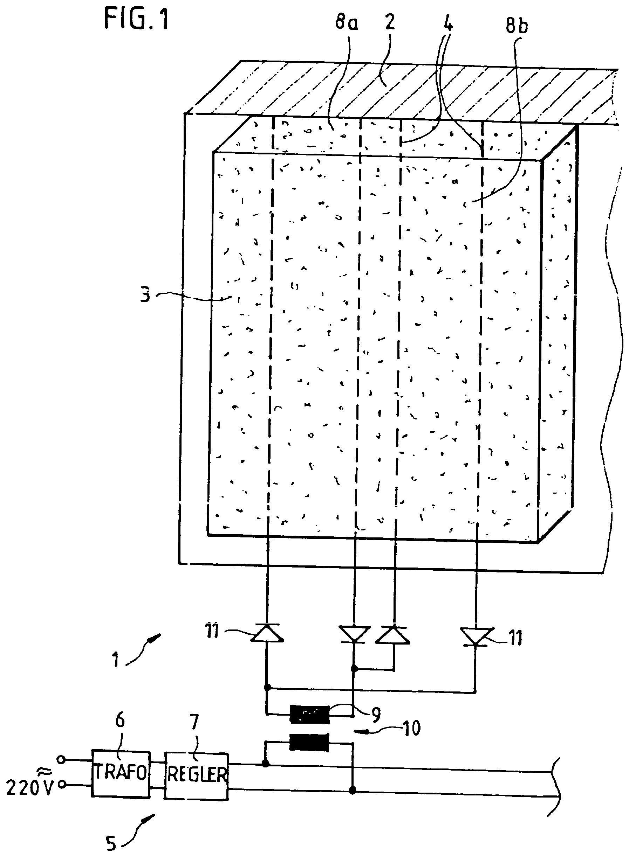

Figur 1 zeigt schematisch und stark vereinfacht eine Ausführungsform einer erfindungsgemäßen Heizeinrichtung 1. Auf und/oder an einem festen, tragfähigen Untergrund 2 ist eine Heizschicht 3 aus einer erfindungsgemäßen, erhärteten Bausubstanz aufgebracht. Die Heizschicht 3 hat vorzugsweise eine geringere Dicke d als der tragfähige Untergrund 2, bspw. eine Dicke d zwischen 1 mm und 10 mm, und ihr spezifischer elektrischer Widerstand p ist dank in einer anorganischen Bindemittelmatrix eingemischter, leitfähiger Partikel kleiner als die spezifische elektrische Leitfähigkeit p des Untergrundmaterials 2, beispielsweise um wenigstens das doppelte größer, vorzugsweise um wenigstens das zwanzigfache größer, insbesondere um wenigstens das zweihundertfache größer.

An oder in der leitfähigen Heizschicht 3 erstrecken sich zwei oder mehrere elektrisch leitende Kontaktierungen 4. Diese Kontaktierungen 4 können bspw. durch Kupferbahnen oder -drähte hergestellt sein, welche vorzugsweise parallel zueinander verlaufen, insbesondere in vertikaler Richtung. Um eine ausreichende Funktionssicherheit zu gewährleisten, sollten diese Metallstreifen 4 eine Breite von mindestens 5 mm aufweisen, vorzugsweise eine Breite von mindestens 10 mm, insbesondere eine Breite von mindestens 15 mm. Wichtig ist hierbei ein möglichst guter Kontakt zur stromführenden Schicht 3 der Heizeinrichtung 1.

Zwei einander benachbarte Kontaktbahnen oder -drähte 4 sind an eine elektrische Stromversorgung, insbesondere an eine elektrische Spannungsquelle 5 angekoppelt. Diese wird bevorzugt aus einem Wechselstromnetz gespeist, bspw. von 220 oder 230 V.

Die Kontaktierungen 4 sind über einen Transformator 6, insbesondere einen Trenntransformator mit einer Spannungsquelle, in diesem Ausführungsbeispiel mit einer Netzspannung von 220 V, verbunden. Der (Trenn-) Transformator 6 transformiert die Netzspannung von 220 V oder 230 V auf eine Niederspannung von beispielsweise 60 V oder weniger herunter. Eine derartige Niederspannung gewährleistet, dass selbst eine direkte Berührung der Heizeinrichtung völlig ungefährlich ist. Vorteilhaft ist der Betrieb der erfindungsgemäßemn Flächenheizeinrichtung mit Niedervoltspannung von 12 V bis 60 V. Es kann sowohl Wechselstrom als auch Gleichstrom verwendet werden.

Alternativ könnte die Niederspannung auch direkt aus einer Niederspannungsquelle, beispielsweise einer Photovoltaikanlage, eingespeist werden.

Zur Steuerung und/oder Regelung der Heizeinrichtung kann stromaufwärts oder stromabwärts des Transformators 6 ein Regler 7 vorgesehen sein, womit die Heizleistung gesteuert oder geregelt werden kann. Bei Speisung mittels Wechselstrom kann hierzu bspw. eine Phasenanschnittsteuerung verwendet werden, bspw. mittels eines oder mehrerer Triacs oder Thyristoren. Durch Verstellung des Zündwinkels kann die der Heizschicht 3 zugeführte elektrische Leistung variiert werden. Diese kann entweder entsprechend einem an einem Potentiometer od. dgl. einstellbaren Sollwert gesteuert werden, oder - unter Verwendung eines Temperatursensors zur Messung des Istwerts - geregelt werden.

Ferner können unterschiedliche Felder 8 der Heizschicht 3 elektrisch voneinander entkoppelt werden, um Kurzschlüsse zu vermeiden. Dies kann entweder dadurch erfolgen, dass die Ausgangsspannung des Transformators 6 oder Reglers 7 unterschiedlichen Feldern 8 mittels unterschiedlicher, galvanisch nicht miteinander verbundener Sekundärwicklungen 9 eines oder mehrerer Trenntransformatoren 10 gespeist werden, und/oder dadurch, dass bspw. benachbarte Felder 8 durch Einschleifen von Dioden 11 nur während jeweils einer Halbwelle der Speisespannung den Strom führen können, so dass jedenfalls ein Kurzschluss zwischen benachbarten Feldern 8 ausgeschlossen ist. Wie Fig. 1 zeigt, ist auch eine Kombination dieser Prinzipien denkbar; der Vorteil ist, dass trotz entkoppelter Heizfelder 8 nur ein einziger Regler 7 erforderlich ist.

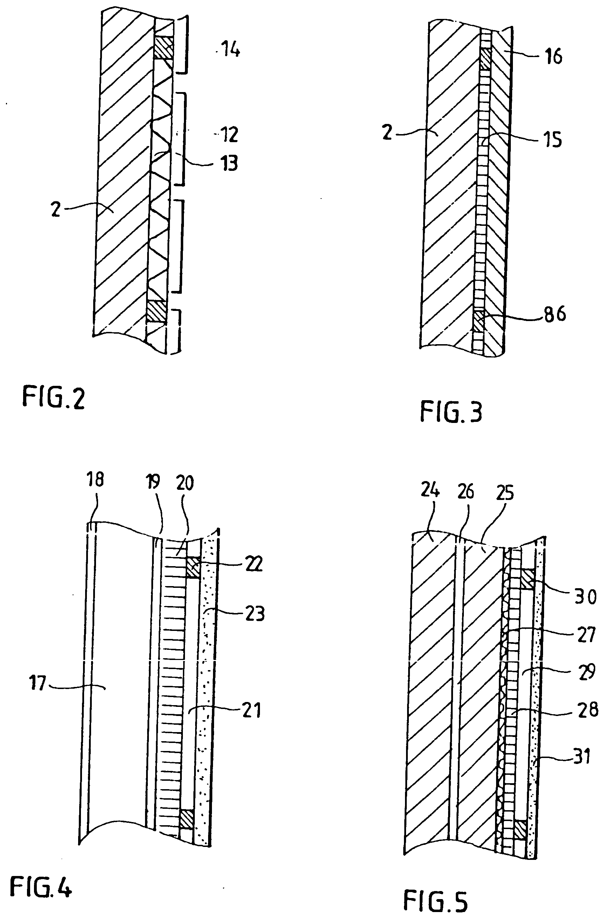

Figur 2 zeigt schematisch ein weiteres Ausführungsbeispiel, welches nicht Gegenstand der vorliegenden Erfindung ist, im Querschnitt.

Dargestellt ist ein Untergrund 2, woran ein Plattenbelag 12 angebracht wird. Bei dem Untergrund 2 kann es sich in diesem Fall um eine Wand, aber auch um einen Fußboden handeln. Als Platten 12 können Fliesen und/oder Natursteine und/oder Kunststeine verwendet werden. Zur Fixierung dient ein pastöser Baustoff in Form eines Fliesen- oder Naturstein- oder Kunststeinklebers 13, der vorzugsweise mit einem kammartigen Spatel, insbesondere mit einer Zahntraufel, auf dem Untergrund 2 aufgetragen wird. Bevorzugt sind in diesem Kleber 13 die erfindungsgemäßen, elektrisch leitfähigen Partikel eingemischt, und diese Kleberschicht 13 bildet nach dem Aushärten die eigentliche Heizschicht. Zu deren Aktivierung sind zwischen dem Plattenbelag 12 und dem Untergrund 2 voneinander beabstandete Kontaktierungen 14 eingelegt, welche für eine flächenartige Verteilung des zugeführten Stroms Sorge tragen.

Bei der Anordnung aus Fig. 3 wird als Untergrund 2 eine Betonwand verwendet. Darauf befindet sich eine Putzhaftbrücke 15, insbesondere eine Mikrozement-Putzhaftbrücke; diese weist als Zuschlagstoff bevorzugt feinen Quarzsand, bspw. der Korngröße 0,2 mm, auf, sowie ferner elektrisch leitfähige Rußpartikel. Diese Putzhaftbrücke 15 wird in Sandkornstärke aufgestrichen oder mit der Lammfellwalze aufgetragen, oder mit einer Spritzdüse auf die sehr glatte Betonwand 2 aufgespritzt. Zur besseren Haftung kann der Putzhaftbrücke 15 z.B. ein Acrylharz und/oder Cellulose zugemischt sein. In diese sehr dünne Schicht werden Anschlusselektroden 86 eingelegt, die von einer Stromversorgung mit einer Spannung von bspw. 24 V gespeist werden. Der Anstrich 15 enthält pro Quadratmeter ca. 30 g bis 60 g elektrisch leitfähigen Ruß.

Abgedeckt wird das Ganze mit einer Putzschicht 16 aus herkömmlichem Gipsmaschinenputz. Nach Austrocknung wird der ganze Putzbelag zur Mörtelheizvorrichtung. Die Putzschicht 16 selbst ist bevorzugt etwas dicker als die Putzhaftbrücke 15, hat bspw. etwa eine Stärke zwischen 5 und 15 mm.

Bei der Anordnung nach Fig. 4, welches nicht Gegenstand der vorliegenden Erfindung ist, wird als Untergrund 2 eine Wand mit einem andere Aufbau verwendet: Eine Hohlkammerwand 17 kann mit Phasenübergangsmaterialien (phase change material, PCM) ausgerüstet sein, welches einen Phasenübergang vom festen in den flüssigen Aggregatszustand bei einer gewünschten Temperatur, bspw. 20 °C, aufweist, so dass es bei dieser Temperatur vergleichsweise viel Wärme aufnehmen oder abgeben kann, ohne dass sich dabei die Temperatur verändert. Dieses Material kann bspw. in den Kammern der Hohlkammerwand angeordnet sein. Da es sich bei der Hohlkammerwand 17 um eine Außenwand handelt, ist diese an ihrer Außenseite mit einem Außenputz 18 versehen. An der Innenseite ist mit einem Mörtelkleber 19 eine Papierwabenplatte 20 fixiert, und auf deren Vorderseite ist die eigentliche Heizschicht 21 als Spachtelmaterial, z.B. als Gips, aufgetragen. In diese Heizschicht 21 sind verschiedene Kontaktbahnen oder - leitungen 22 eingelegt, und darauf wird sodann der Deckputz 23 aufgetragen.

Die Fig. 5 zeigt ein weiteres, besonders bevorzugtes Beispiel einer Heizeinrichtung, welche nicht Gegenstand der vorliegenden Erfindung ist. Dabei wird als Untergrund 2 eine Betonsandwich-Platte verwendet, wie sie vor allem Dingen sehr oft in östlichen Ländern anzutreffen sind, mit zwei zueinander parallelen Betonplatten 24, 25 und einer dazwischen angeordneten, Isolierschicht 26. Im Bereich der Innenseite einer derartigen Außenwand ist eine Mörtel-Heiz-Schicht aufgebracht: Dazu wird zunächst mit einem Zementkleber 27 eine Isolierschicht 28 aufgebracht, z.B. aus 1,5 cm starkem Styropor oder Polyurethan, oder eine Papierkarton-Wellplatte, oder eine Glasschaumplatte, od. dgl. Darauf wird eine gips- oder zementgebundene Spachtelschicht 29 mit ca. 4 mm Auftragsstärke, mit oder ohne nichtmetallischem Armierungsgewebe, aufgebracht, bspw. ein Verputz-Armierungsgewebe. Dieses Armierungsgewebe kann auch ein Glasseidengewebe sein, in welches elektrisch leitende Fasern eingewebt sind. Diese ggf. armierte Spachtelschicht 29 ist mit elektrisch begrenzt leitfähigem, dabei jedoch elektrischen Widerstand leistenden Material, z.B. Kohlenstoffpartikel oder Metallpulver, versetzt. Für die leichtere Verarbeitung sind Mikrohohlglaskugeln als Leichtzuschlagstoff zugemischt. Diese ggf. armierten Spachtelschicht 29 wird mit Anschlusselektroden 30 versehen und mit 12 V Niederspannungsstrom kontaktiert. Die so entstandene Mörtelheizschicht 29 kann noch mit einem herkömmlichen Putz 31 beschichtet werden, z.B. mit einem mineralischen, zementgebundenen Putz, oder sie wird mit Farbe bestrichen; bspw. mit einem Putz oder einer Farbe auf Silikonharz-, Dispersions-, Acrylharz-, Silikatbasis.

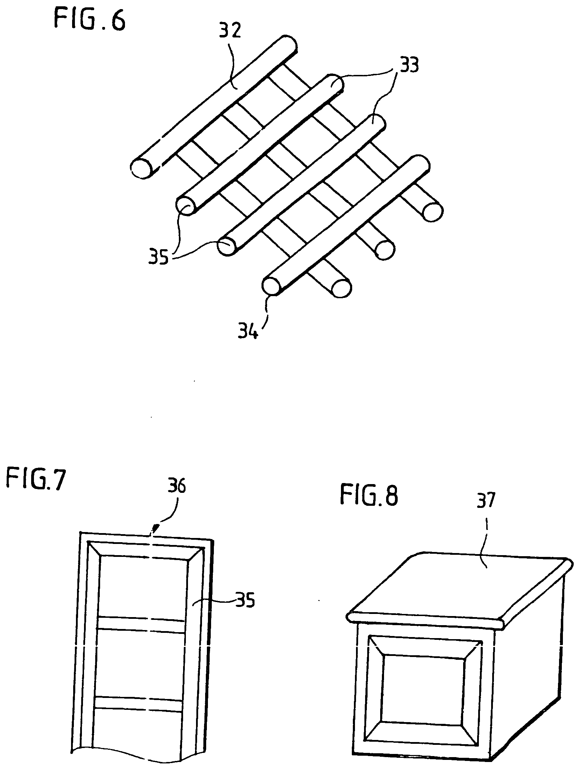

In einem weiteren, in Fig. 6 dargestellten Fall sind in einem luft- und wasserdichten Kunststoff-Röhrengeflecht 32, also einem Geflecht aus Röhren 33, vorzugsweise mit einem Mantel 34 aus Kunststoff, luft- und wasserdicht abgeschlossene Hohlräume 35 vorgesehen. Darin wird ein Injektionsbaustoff als Heizschicht eingebracht und elektrisch kontaktiert. Ein solches Röhrenheizgeflecht 32 kann überall dort zum Einsatz kommen, wo eine wasserdichte Anwendung gefordert ist, z.B. im Bereich eines Swimmingpools, insbesondere einer Swimmingpool-Betonwand.

Gemäß Fig. 7 können auch die Rahmen- und/oder Zargenteile 35 von Kunststofffenstern 36 und Kunststofftüren mit dem Heizmörtelbaustoff gefüllt oder innen beschichtet und elektrisch kontaktiert werden, um diese als Heizelemente zu nutzen.

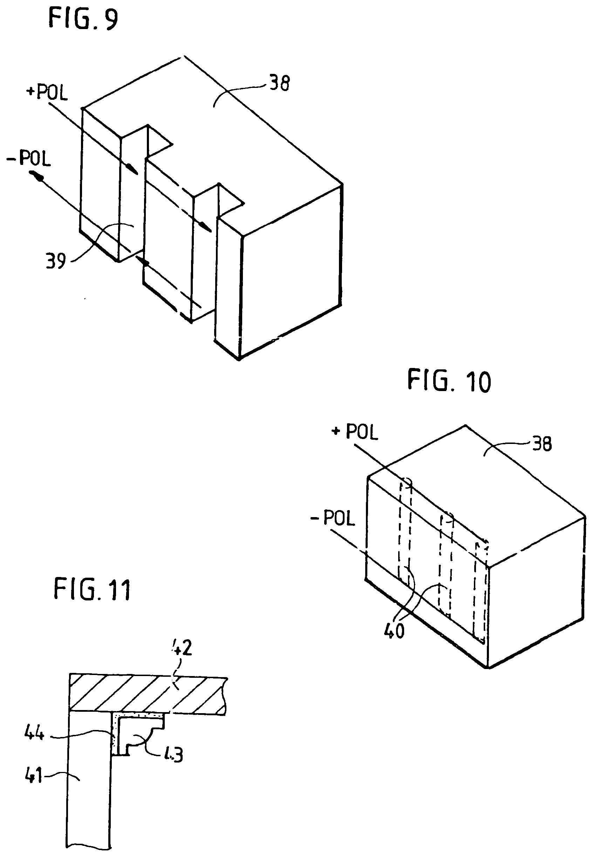

Wie Fig. 8 zeigt, können aber auch andere Formteile 37, z.B. aus Glas, Porzellan oder Keramik, innen oder außen mit einem Heizmörtel beschichtet oder gefüllt werden und werden so ebenfalls zu Heizungsformteilen. Glasschaumteile 38 können in jeder Form hergestellt werden, bspw. als Glasschaumprofile, Glasschaumplatten oder Glasschaumsteine. Wie aus Fig. 9 ersichtlich ist, können derartige Glasschaumteile 38 mit Vertiefungen 39 versehen sein oder werden, insbesondere mit Nuten, Schlitzen oder Einfräsungen. In diese Vertiefungen 39 kann der erfindungsgemäße Heizbaustoff eingefüllt oder aufgetragen und elektrisch kontaktiert werden.

Glasschaumteile 38 können in jeder Form hergestellt werden, bspw. als Glasschaumprofile, Glasschaumplatten oder Glasschaumsteine. Wie aus Fig. 9 ersichtlich ist, können derartige Glasschaumteile 38 mit Vertiefungen 39 versehen sein oder werden, insbesondere mit Nuten, Schlitzen oder Einfräsungen. In diese Vertiefungen 39 kann der Heizbaustoff eingefüllt oder aufgetragen und elektrisch kontaktiert werden.

In derartigen Kanälen könnten auch Graphitstifte eingelegt werden.

Als weitere Alternative wäre es denkbar, im Herstellungsprozess für den Glasschaum in das Rohmaterial vor der Glasschmelze Metallpulver zuzugeben, so dass die fertigen Glasschaumteile 38 selbst als Heizvorrichtung verwendbar sind; in diesem Fall könnte dann in ggf. vorhandene Ausnehmungen 39, 40 elektrische Kontaktierungen eingelegt werden.

Eine andere Variante ist in Fig. 11 dargestellt. Man erkennt dort den Übergangsbereich von einer Zimmerwand 41 in die Zimmerdecke 42. Entlang dieses Deckenrandes verläuft ein Wandabschlussprofil 43, vorzugsweise ein Glasschaumprofil. Dieses ist mit einem Kleber 44 an der Zimmerwand 41 und/oder an der Zimmerdecke 42 festgeklebt. Auch dieser Kleber 44 kann mit untergemischten, leitfähigen Partikeln versehen sein und als Heizbaustoff verwendet werden.

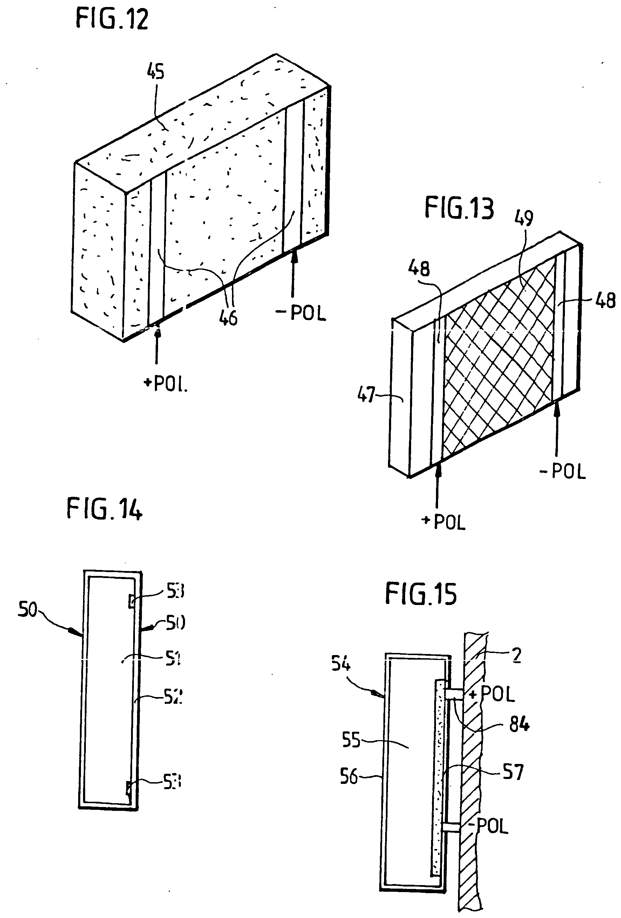

Die in Fig. 12 dargestellten Gipsfaserplatte 45 ist eine Bauplatte, die im wesentlichen aus Papierschnipseln, also aus organischen Polymerfasern (Papierfasern) als Füllstoff und mit Gips als Bindemittel hergestellt wird. Dabei ist es möglich, in einer Matrix aus organischem Material, insbesondere einem organischen Polymer, z.B. Papier, leitfähige Partikel einzulagern. Gipsfaserplatten 45 können also bspw. aus Papierfasern hergestellt werden, die zuvor mit Graphit oder einem anderen (Halb-) Leiter getränkt wurden, und werden so zu Heizplatten, wenn sie mit elektrischen Kontakten 46, insbesondere Kontaktbahnen 46, versehen werden. Dabei dienen die in dem Baustoff eingelagerten, mit einem leitfähigen Material bedruckten oder getränkten Papierschnipsel als leitfähige Partikel. Andererseits kann aber auch das Bindemittel derartiger Gipsfaserplatten 45 selbst aus einem Gipsbrei bestehen, der mit (anderen) leitfähigen Partikeln vermischt ist.

Ähnliches gilt für Polymerfaserplatten mit anderen Bindemitteln. In Fig. 13 ist eine Mikrozement-Polymerfaser-Platte 47 zu sehen, die ebenfalls mit leitfähig bedruckten oder getränkten Papierschnipseln hergestellt sein und mit Kontaktierungen 48 versehen sein kann. Gleiches gilt für andere Formteile aus diesen Materialien, insbesondere aus Papier- oder Polymerfasern, z.B. heizbare Boden- oder Wandplatten.

Wie Fig. 13 weiter zeigt, kann ggf. auf derartigen Platten auch eine Heizschicht 49 appliziert sein, die sich flächig zwischen den Kontaktierungen 48 erstreckt.

Bei der in Fig. 14 dargestellten Ausführungsform handelt es sich um eine Gipskartonplatte 50, die unter Verwendung eines Baustoffs hergestellt wurde. Dieser Baustoff bildet in erhärtetem Zustand den Gipskern 51; dieser Gipskern 51 ist dabei komplett aus diesem Baustoff mit den eingelagerten, elektrisch leitfähigen, Widerstand leistenden Partikeln hergestellt und weist demnach eine etwa homogene elektrische Leitfähigkeit auf. Der Gipskern 51 ist von einem Deckpapier 52 oder -karton umhüllt, dessen primäre Aufgabe darin besteht, das staubförmige Ablösen von Gipspartikeln aus dem Gipskern 51 zu verhindern. Dabei kann die Innenseite dieses Deckpapiers 52 mit Kontaktbahnen 53 versehen sein, bspw. mit aufgedruckten Kupferleitungen. Wenn jede derartige Gipskartonplatte 50 wenigstens zwei derartige Kontaktbahnen 53 aufweist, läßt sich damit wenigstens ein komplettes Heizfeld 8 pro Platte 50 realisieren. Die Stromeinspeisung kann wahlweise mit an den Kontaktbahnen 53 angeschlossenen und herausgeführten Anschlussdrähten erfolgen, oder aber mit Hilfe dieselben durchgreifender Anschluss- oder Montageelemente.

In Fig. 15 ist eine abgewandelte Ausführungsform dieses Prinzips wiedergegeben. Man erkennt wiederum eine Gipskartonplatte 54 mit einem Gipskern 55 und einer Umhüllung aus Deckpapier 56 oder -karton. In diesem Fall ist jedoch der Gipskern 55 nicht komplett aus dem elektrisch leitfähige Partikel aufweisenden Baustoff hergestellt, sondern nur ein Teil desselben, vorzugsweise nur ein flächiger Bereich 57 entlang einer Grund- oder Hauptfläche der Gipskartonplatte 54, während der übrige Bereich des Gipskerns 55 relativ hochohmig ist. In diesem Fall kann die Gipskartonplatte 54 vorzugsweise derart an einer Wand oder einem sonstige Untergrund 2 montiert werden, dass der flächige Bereich 57 aus dem Baustoff dem betreffenden Untergrund 2 zugewandt ist. Hierzu können mehrere leitfähige Befestigungsmittel 84, bspw. wenigstens zwei Befestigungsschienen aus Metall, verwendet werden, welche mit einem Pol einer Spannungsquelle verbunden werden können und dann als Niedervolt-Elektroden für die Flächenheizeinrichtung dienen.

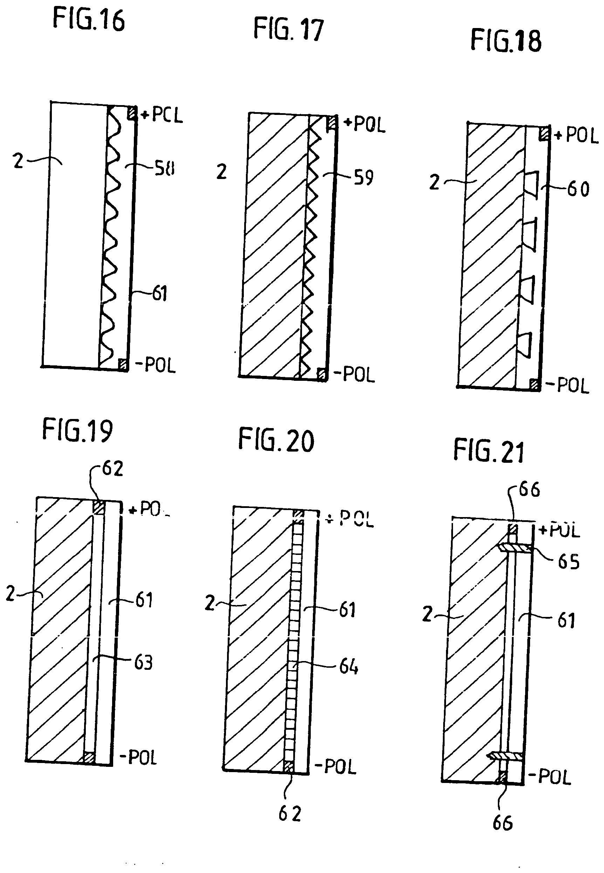

Die Fig. 16 bis 18 zeigen mit einem Baustoff hergestellte Flächenheizplatten 58-60, welche eine profilierte oder strukturierte Oberfläche aufweisen, um in Verbindung mit einer auf dem Untergrund 2 aufgetragenen Klebe- oder Mörtelmasse 61 einen besseren Haftverbund zu dem Untergrund 2 zu erzielen. Diese Klebe- oder Mörtelmasse 61 kann elektrisch leitfähige Partikel enthalten. Die Flächenheizplatte 58 bspw. ist auf ihrer Rückseite gewellt; die Flächenheizplatte 59 verfügt über eine rückwärtige Profilierung aus Wellen mit einem gezackten Querschnitt; diese rückwärtige Profilierung kann auch schwalbenschwanzförmig sein, wie bei der Flächenheizplatte 60 aus Fig. 18.

Eine Profilierung mit einem vergleichbaren oder einem beliebigen anderen Querschnitt könnte auch an der Plattenvorderseite 61 vorgesehen sein, um die Wärmeabstrahlungsfläche zu erhöhen.

Weitere Vorteile lassen sich dadurch erzielen, dass Flächenheizplatten 61 mit Abstand an einem Untergrund 2 befestigt werden, wie in den Fig. 19 bis 21 dargestellt. Bei der Ausführungsform nach Fig. 19 befinden sich zwischen der Rückseite der Flächenheizplatte 61 und dem Untergrund 2 Abstandhalter 62, welche gleichzeitig als Kontaktbahnen oder - elemente dienen können. In dem Bereich zwischen diesen Abstandhaltern 62 bzw. Kontaktbahnen oder -elementen verbleibt zwischen der Flächenheizplatte 61 und dem Untergrund 2 ein vorzugsweise flächiger Hohlraum 63, worin ggf. Luft zirkulieren kann, so dass sich die Wärmetauschfläche für die durch Konvektion abzugebende Wärme erhöht, während gleichzeitig eine zusätzliche Isolation gegenüber einer Außenwand als Untergrund 2 eingefügt ist. Im Rahmen eines solchen Hohlraums 63 ist ein Abstand zwischen Flächenheizplatte 61 und Untergrund 2 von 1,0 mm bis 20 mm insbesondere von 2,0 mm bis 10 mm, zweckmäßig.

Die dadurch entstehenden Hohlräume 63 können zur Anbringung von Isoliermaterial 64 benutzt werden, oder mit einem Phasenänderungsmaterial (PCM) gefüllt sein, wodurch die Temperatur bei dem betreffenden Phasenübergang näherungsweise konstant gehalten wird, vgl. Fig. 20.

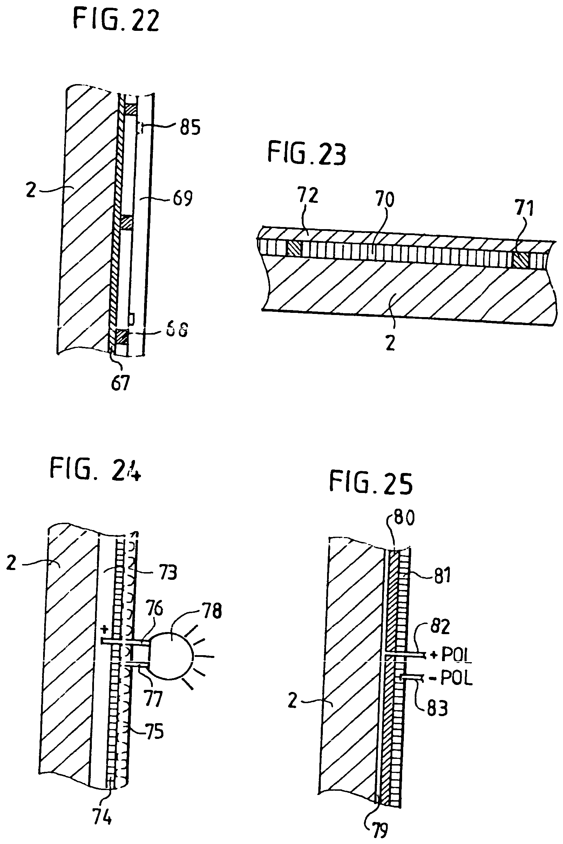

In Fig. 22 ist eine weitere Ausführungsform dargestellt, wobei auf einer Wand oder einem sonstigen Untergrund 2 zunächst eine Isolationsschicht 67 aufgebracht ist. Daran ist dann mit Befestigungsmaterial 68 eine aus einem erfindungsgemäßen Baustoff gefertigte Flächenheizplatte 69 befestigt, jedoch vorzugsweise nicht kontaktiert. Zur Kontaktierung dienen vielmehr in der Flächenheizplatte 69, vorzugsweise an deren Rückseite integrierte Kupferleitungen 85, welche bspw. über herausgeführte Drähte kontaktiert, d.h., mit einer Strom- oder Spannungsquelle verbunden werden können.

In Fig. 22 ist eine weitere Ausführungsform der Erfindung dargestellt, wobei auf einer Wand oder einem sonstigen Untergrund 2 zunächst eine Isolationsschicht 67 aufgebracht ist. Daran ist dann mit Befestigungsmaterial 68 eine aus einem erfindungsgemäßen Baustoff gefertigte Flächenheizplatte 69 befestigt, jedoch vorzugsweise nicht kontaktiert. Zur Kontaktierung dienen vielmehr in der Flächenheizplatte 69, vorzugsweise an deren Rückseite integrierte Kupferleitungen 85, welche bspw. über herausgeführte Drähte kontaktiert, d.h., mit einer Strom- oder Spannungsquelle verbunden werden können.

Fig. 23 zeigt eine besonders vorteilhafte Anwendung der Erfindung, wobei in Neubauten, aber auch in Altbauten, auf einem dortigen Fußboden als Untergrund 2 ein Fußbodenfließspachtelmörtel, welcher elektrisch leitfähige Partikel aufweist, die in diesem Falle - ab er auch in allen anderen Fällen - bevorzugt aus Ferrosilizium oder zerkleinerte Carbonfasern, insbesondere aus Recyclingmaterial von Carbonfasermatten, sein können, in Form einer Schicht 70 aufgespachtelt wird. Bevorzugt handelt es sich bei den leitfähigen Partikeln um teilweise äußerst kleine Partikel. Die Heizschicht hat eine Stärke von bis zu 50 mm, bevorzugt von 0,02 mm bis 5 mm, aber auch von 0,01 mm bis 10 mm oder gar von 0,001 mm bis 15 mm. In die Schicht 70 können Kontaktbahnen 71 oder ähnliche Kontaktelemente eingelegt werden. Solche Fußbodenausgleichsmassen 70 werden bevorzugt mit einem Belag 72 versehen, bspw. einem Teppichboden, oder Linoleum, Laminat, Parkett, Fliesen oder Naturstein. Andererseits können solche Fußbodenspachtel- oder - beschichtungsmassen auch ohne Oberbelag, auch als farbige Mörtelschicht ausgeführt werden. Oftmals werden solche Spachtel- oder Dünnbeschichtungen mit klarem oder farbigem Epoxydharz beschichtet.

Im Rahmen einer Fußbodenheizung kann auch auf den Heizmörtel eine wasserdichte und gleichzeitig elektrisch isolierende Schicht aufgebracht sein, bspw. ein derartig ausgerüsteter Fliesenkleber oder eine Bitumenabdichtung, worauf dann bspw. mit einem Fliesenkleber Fliesen aufgeklebt werden. Eine solche Ausbildung eignet sich besonders für Naßzellenbereiche od. dgl.

Bei allen vorbeschriebenen Beispielen kann den Baustoffen neben Graphit- oder Metallpartikeln auch Kohlenstoff in Form sog. Kohlenstoffnanoröhrchen (carbon nano tubes CNT) beigemengt sein, entweder ausschließlich oder in Verbindung mit anderen leitfähigen Partikeln.

In Fig. 24 ist eine weitere Besonderheit der Erfindung wiedergegeben:
Auf einem Untergrund 2 ist mittels eines erfindungsgemäßen Baustoffs eine (erste) Flächenheizschicht 73 aufgebracht. Diese ist durch eine elektrisch isolierende Schicht 74 abgedeckt. Auf deren Ober- oder Außenseite kann eine zweite, elektrisch leitende Schicht 75 oder eine zweite Flächenheizschicht aufgebracht sein. In und/oder an jeder elektrisch (begrenzt) leitenden Schicht 73, 75 sind in der Zeichnung nicht dargestellt Kontaktierungen, bspw. Kontaktbahnen, vorgesehen, welche mit unterschiedlichen Anschlüssen einer oder mehrerer Strom- oder Spannungsquelle(n) verbunden werden. Dabei kann dieser Anschluß der stromzuführenden Kontaktierungen derart erfolgen, dass sich zumindest während des Betriebs der Heizeinrichtung(en) 73, 75 ein Spannungsoffset zwischen den beiden elektrisch (begrenzt) leitenden Schichten 73, 75 einstellt. Dadurch ist es möglich, die beiden Anschlussleitungen 76, 77, -drähte oder -stifte einer Lampe 78 - oder jedes beliebigen anderen elektrischen, zweipoligen (Niedervolt-) Verbrauchers - mit je einer der beiden elektrisch (begrenzt) leitenden Schichten 73, 75 zu verbinden, bspw. indem diese in die noch weiche Baustoffmischung eingedrückt werden. Vorzugsweise ist dabei eine Anschlußleitung 76 länger als die andere Anschlussleitung 77 des Verbrauchers 78, damit die längere die elektrische Isolierschicht 74 durchdringen kann, die andere jedoch nicht. Dabei ist lediglich sicherzustellen, dass die in die untere bzw. tieferliegende Schicht 73 eingesteckte Anschlussleitung 77 keinen Kontakt zu der oberseitigen Schicht 75 erhält, um einen Kurzschluss zwischen diesen beiden Schichten 73, 75 zu vermeiden.

Fig. 25 zeigt eine Anordnung mit einem umgekehrten Aufbau. Auf den Untergrund 2 wird eine Metallschicht 79 aufgetragen, darauf eine elektrisch isolierende, neutrale Schicht 80, und darauf wiederum eine Schicht 81 der erfindungsgemäßen Baustoffmischung als Flächenheizeinrichtung. Mit der Metallschicht 79 können Stifte 82 mit einem isolierten Mantel galvanisch verbunden sein, welche die äußeren oder oberseitigen Schichten 80, 81 durchdringen und als erster elektrischer Pol zum Abgriff des Potentials in der Metallschicht 79 verwendet werden können. Als Gegenpol kann die Fächenheizschicht 81 bzw. daran angeordnete Stifte 83 dienen, sofern diese ein anderes elektrisches Potential aufweist. An je ein derartiges Polpaar 82, 83 können dann Elektroelemente, wie z.B. Lampen angeschlossen werden.

Erfindungsgemäße Heizeinrichtungen 1 sind aufgrund ihrer oben genannten Eigenschaften vielseitig einsetzbar. Sofern das Material eine ansprechende optische Erscheinungsform aufweist, kann die Heizeinrichtung tatsächlich als Sichtfläche verwendet werden, und es ist somit nicht erforderlich, eine herkömmliche Tapete über die Heizeinrichtung zu kleben.

Auch im Sanitärbereich ist der Einsatz der erfindungsgemäßen Heizeinrichtung 1 möglich. Ferner ist es beispielsweise denkbar, ein Schwimmbad mit einer derartigen Heizeinrichtung 1 zu ummanteln, welche beispielsweise durch eine Photovoltaikanlage gespeist wird. Die erfindungsgemäße Heizeinrichtung 1 kann mit einem Wärmeisoliermantel bzw. einer Wärmeisolationsschicht umgeben sein, um Wärmeverluste zu minimieren.

## Patentansprüche

1. Verfahren zur Herstellung einer elektrischen Flächenheizeinrichtung (1), wobei aus einer Baustoffmischung, bestehend aus wenigstens einem anorganischen Bindemittel, bspw. Zement und/oder Gips, aus wenigstens einem elektrisch nicht leitenden Zuschlagstoff, bspw. Sand und/oder Gesteinsmehl, und aus wenigstens einem weiteren Zuschlagstoff aus elektrisch leitfähigen Partikeln, bspw. Ferrosilizium oder Kohlenstofffasern und/oder -späne, ggf. auch aus Recyclingmaterial von Carbonfasermatten, ein in flüssigem oder pastösem Zustand verarbeitbarer Baustoff angemischt wird, **dadurch gekennzeichnet, dass** die leitfähigen Partikel mit den anderen Bestandteilen der Baustoffmischung vollständig vermischt sind und dadurch homogen innerhalb der Baustoffmischung verteilt sind, aus der durch Hinzugabe von Wasser ein in flüssigem oder pastösem Zustand verarbeitbarer Baustoff angemacht wird, und dass dieser Baustoff zu einem flächenhaften Produkt (3) verarbeitet wird, welches mit niederohmigen Kontaktierungen (4) zum Einspeisen eines flächenhaft verteilten Stroms versehen wird, wobei der flüssige oder pastöse Baustoff vor Ort an einer Begrenzungsfläche eines Raums eines Gebäudes als festem, tragfähigen Untergrund aushärtet, nämlich in Form eines Estrichs, Putzes, Mörtels oder Klebemittels.

2. Verwendung einer Baustoffmischung bei der Herstellung einer elektrischen Flächenheizeinrichtung (1) nach dem Verfahren gemäß Anspruch 1 unter Aushärtung vor Ort an einer Begrenzungsfläche eines Raums eines Gebäudes als festem, tragfähigen Untergrund in Form eines Estrichs, Putzes, Mörtels oder Klebemittels, **dadurch gekennzeichnet, dass** die Baustoffmischung enthält: wenigstens ein anorganisches Bindemittel, bspw. Zement und/oder Gips, durch wenigstens einen elektrisch nicht leitenden Zuschlagstoff, bspw. Sand und/oder Gesteinsmehl, und durch wenigstens einen weiteren Zuschlagstoff aus elektrisch leitfähigen Partikeln, bspw. Ferrosilizium oder Kohlenstofffasern und/oder -spänen, ggf. auch aus Recyclingmaterial von Carbonfasermatten, wobei die leitfähigen Partikel mit den anderen Bestandteilen der Baustoffmischung vollständig vermischt sind und dadurch homogen innerhalb der Baustoffmischung verteilt sind, wobei aus der Baustoffmischung durch Hinzugabe von Wasser ein in flüssigem oder pastösem Zustand verarbeitbarer Baustoff angemacht wird, der zu einem flächenhaften Produkt (3) verarbeitbar ist.

3. Elektrische Flächenheizeinrichtung (1), hergestellt nach dem Verfahren gemäß Anspruch 1, umfassend wenigstens ein anorganisches Bindemittel, bspw. Zement und/oder Gips, wenigstens einen elektrisch nicht leitenden Zuschlagstoff, bspw. Sand und/oder Gesteinsmehl, und wenigstens einen weiteren Zuschlagstoff aus elektrisch leitfähigen Partikeln, bspw. Kohlenstofffasern und/oder -spänen, ggf. auch aus Recyclingmaterial von Carbonfasermatten, wobei der aus der Baustoffmischung durch Hinzugabe von Wasser angemachte, flüssige oder pastöse Baustoff vor Ort an einer Begrenzungsfläche eines Raums eines Gebäudes als festem, tragfähigen Untergrund ausgehärtet ist, nämlich in Form eines Estrichs, Putzes, Mörtels oder Klebemittels.

4. Flächenheizeinrichtung (1) nach Anspruch 3, **gekennzeichnet durch** Kontaktierungen (4) zum Einspeisen eines Flächenstroms.

5. Flächenheizeinrichtung (1) nach Anspruch 4, **dadurch gekennzeichnet, dass** die Kontaktierungen (4) derart beschaffen sind, dass sich ein homogener Flächenstrom ergibt.

6. Flächenheizeinrichtung (1) nach einem der Ansprüche 4 oder 5, **dadurch gekennzeichnet, dass** die Kontaktierungen (4) mehrere Metallstreifen aufweisen, welche parallel zueinander verlaufen.

7. Flächenheizeinrichtung (1) nach einem der Ansprüche 3 bis 6, **dadurch gekennzeichnet, dass** der erfindungsgemäße Baustoff im abgebundenen, ausgetrockneten Zustand einen spezifischen elektrischen Widerstand p von wenigstens 10⁻³ Ω*cm aufweist, vorzugsweise einen spezifischen elektrischen Widerstand p von wenigstens 10⁻² Ω*cm, insbesondere einen spezifischen elektrischen Widerstand p von 10⁻¹ Ω*cm oder mehr, oder gar einen spezifischen elektrischen Widerstand p von 1 Ω*cm oder. mehr, und/oder einen spezifischen elektrischen Widerstand p von höchstens 10⁴ Ω*cm, beispielsweise einen spezifischen elektrischen Widerstand p von allenfalls 10³ Ω*cm, im Besonderen einen spezifischen elektrischen Widerstand p von 10² Ω*cm oder weniger, oder gar einen spezifischen elektrischen Widerstand p von 10 Ω*cm oder weniger.

8. Flächenheizeinrichtung (1) nach einem der Ansprüche 3 bis 7, **dadurch gekennzeichnet, dass** ein Armierungsgewebe in den Heizmörtel eingelegt ist, bspw. ein Glasseidengewebe, vorzugsweise ein Gewebe mit eingewebten elektrisch leitenden Fasern.

9. Flächenheizeinrichtung (1) nach einem der Ansprüche 3 bis 8, **dadurch gekennzeichnet, dass** sie als Platte ausgebildet ist.

10. Flächenheizeinrichtung (1) nach einem der Ansprüche 3 bis 9, wobei ein Flächenstrom in einer Flächenheizschicht (3) eingespeist wird, die durch eine elektrisch isolierende Schicht (74,80) von einer zweiten Flächenheizschicht oder von einer elektrisch leitenden Schicht (74,79) getrennt ist, **dadurch gekennzeichnet, dass** ein Potential in der den Flächenstrom führenden Flächenheizschicht als Pol für wenig-stens eine Anschlussleitung (76,77) eines elektrischen (Niedervolt-) Verbrauchers, bspw. einer Lampe (78), oder jedes beliebigen anderen elektrischen, zweipoligen (Niedervolt-) Verbrauchers dient.

11. Flächenheizeinrichtung (1) nach einem der Ansprüche 3 bis 10, **dadurch gekennzeichnet, dass** dem Baustoff zur Herstellung der Heizschichten zur thermischen Nacherhärtung Polyurethan-Harze zugegeben sind.

## Claims

1. Method for the manufacture of an electrical surface heating device (1), wherein a processible construction material which is processible in the liquid or in the paste-like state is mixed from a material mixture, which comprises at least one inorganic binder, for example cement and/or gypsum, at least one electrically non-conductive aggregate, for example sand and/or rock flour, and at least one additional aggregate comprising electrically conductive particles, for example ferrosilicon or carbon fibers and/or carbon chippings, which may also be from a recycling material made of carbon fiber mats, **characterized in that** the conductive particles are completely mingled with the other components of the material mixture and thereby are homogeneously distributed within the material mixture, from which a construction material which is processible in the liquid or in the paste-like state is puddled by addition of water, and **in that** this construction material is processed into a planar product (3), which is provided with low-resistance contactings (4) for feeding a two-dimensionally distributed electrical current, wherein the liquid or the paste-like construction material is hardened in situ on a boundary surface of a room of a building as a solid, weight-bearing substrate, namely in the form of a screed, plaster, mortar or an adhesive.

2. Use of a material mixture in the manufacture of an electrical surface heating device (1) in pursuance of the method according to claim 1 through hardening in situ on a boundary surface of a room of a building as a weight-bearing substrate, in the form of a screed, plaster, mortar or an adhesive, **characterized in that** the material mixture comprises: at least one inorganic binder, for example cement and/or gypsum, at least one electrically non-conductive aggregate, for example sand and/or rock flour, and at least one additional aggregate comprising electrically conductive particles, for example ferrosilicon or carbon fiber and/or carbon chippings, which may also be from a recycling material made of carbon fiber mats, wherein the conductive particles are completely mingled with the other components of the material mixture and thereby are homogeneously distributed within the material mixture, wherein a construction material which is processible in the liquid or in the paste-like state is puddled from the material mixture by addition of water, wherein the construction material can be processed into a planar product (3).

3. Electrical surface heating device (1) which is manufactured by use of the method according to claim 1, comprising at least one inorganic binder, for example cement and/or gypsum, at least one electrically non-conductive aggregate, for example sand and/or rock flour, and at least one additional aggregate comprising electrically conductive particles, for example carbon fiber and/or carbon chippings, which may also be from a recycling material made of carbon fiber mats, wherein the construction material puddled from the material mixture by addition of water is hardened in situ on a boundary surface of a room of a building as a solid, weight-bearing substrate, namely in the form of a screed, plaster, mortar or an adhesive.

4. Surface heating device (1) according to claim 3, **characterized by** contactings (4) for feeding a two-dimensional electrical current.

5. Surface heating device (1) according to claim 4, **characterized in that** the contactings (4) are constructed in such a way, that a homogenous two-dimensional current is obtained.

6. Surface heating device (1) according to one of claims 4 or 5, **characterized in that** the contactings (4) comprise several metal strips, which extend parallel to each other.

7. Surface heating device (1) according to one of claims 3 to 6, **characterized in that** in the hardened, cured state, the construction material according to the invention exhibits an electrical resistivity p of at least 10⁻³ Ω*cm, preferably an electrical resistivity p of at least 10⁻² Q*cm, especially an electrical resistivity p of at least 10⁻¹ Ω*cm or more, or even an electrical resistivity p of 1 Ω*cm or more, and/or a specific electrical resistivity p of not more than 10⁴ Ω*cm, for example a specific electrical resistivity p at most 10³ Ω*cm, specifically a specific electrical resistivity p of not more than 10² Ω*cm or less, or even a specific electrical resistivity p of 10 Ω*cm or less.

8. Surface heating device (1) according to one of claims 3 to 7, **characterized in that** a reinforcement fabric is introduced into the heating mortar, for example a glass silk fabric, preferably a fabric with woven-in electrically conductive fibers.

9. Surface heating device (1) according to one of claims 3 to 8, **characterized in that** it is formed as a panel.

10. Surface heating device (1) according to one of claims 3 to 9, wherein a two-dimensional current is fed in a two-dimensional heat layer (3), which is separated from a second two-dimensional heat layer or from an electrically conducting layer (74,79) by an electrically isolated layer (74,80), **characterized in that** a potential in the two-dimensional heat layer, which conducts the two-dimensional current, serves as a pole for at least one connection cable (76,77) of an electrical (low-voltage) load, for example of a lamp (78) or any other electrical bipolar (low-voltage) load.

11. Surface heating device (1) according to one of claims 3 to 10, **characterized in that** polyurethane resins are added to the material for the manufacture of the heating layers for a subsequent thermal hardening.

## Revendications

1. Procédé de fabrication d'un dispositif de chauffage électrique de grande surface (1), en ce qu'un matériau transformable à l'état fluide ou pâteux est mélangé à partir d'un mélange de matériaux, comprenant au moins un liant inorganique, par exemple du ciment et/ou du plâtre, au moins un agrégat électriquement non conducteur, par exemple du sable et/ou de la poudre de roche, et au moins un autre agrégat composé de particules électriquement conductrices, par exemple du ferrosilicium ou des fibres et/ou des copeaux de carbone, le cas échéant également un matériau recyclé de mats de fibres de carbone, **caractérisé en ce que** les particules conductrices sont mélangées complètement avec les autres composants du mélange de matériaux et sont ainsi réparties de manière homogène dans le mélange de matériaux, à partir duquel un matériau transformable à l'état fluide ou pâteux est gâché en ajoutant de l'eau, et **en ce que** ce matériau est transformé en un produit plan (3), qui est pourvu de contacts (4) à basse impédance pour l'alimentation d'un courant électrique réparti dans le plan, **en ce que** le matériau fluide ou pâteux durcit sur site au niveau d'une surface de délimitation d'une pièce d'un bâtiment en tant que support solide, portant, notamment sous forme de chape, d'enduit, de mortier ou de colle.

2. Utilisation d'un mélange de matériaux pour la fabrication d'un dispositif de chauffage électrique de grande surface (1) suivant le procédé selon la revendication 1 par durcissement sur site au niveau d'une surface de délimitation d'une pièce d'un bâtiment en tant que support solide, portant, sous forme de chape, d'enduit, de mortier ou de colle, **caractérisé en ce que** le mélange de matériaux contient : au moins un lient inorganique, par exemple du ciment et/ou du plâtre, au moins un agrégat électriquement non conducteur, par exemple du sable et/ou de la poudre de roche, et au moins un autre agrégat composé de particules électriquement conductrices, par exemple du ferrosilicium ou des fibres et/ou des copeaux de carbone, le cas échéant également un matériau recyclé de mats de fibres de carbone, **en ce que** les particules conductrices sont mélangées complètement avec les autres composants du mélange de matériaux et sont ainsi réparties de manière homogène dans le mélange de matériaux, **en ce qu'**un matériau transformable à l'état fluide ou pâteux est gâché à partir du mélange de matériaux en ajoutant de l'eau, ledit matériau pouvant être transformé en un produit plan (3).

3. Dispositif de chauffage électrique de grande surface (1), fabriqué suivant le procédé selon la revendication 1, comprenant au moins un liant inorganique, par exemple du ciment et/ou du plâtre, au moins un agrégat électriquement non conducteur, par exemple du sable et/ou de la poudre de roche, et au moins un autre agrégat composé de particules électriquement conductrices, par exemple des fibres et/ou des copeaux de carbone, le cas échéant également un matériau recyclé de mats de fibres de carbone, en ce que le matériau fluide ou pâteux gâché à partir du mélange de matériaux en ajoutant de l'eau est durci sur site au niveau d'une surface de délimitation d'une pièce d'un bâtiment en tant que support solide, portant, notamment sous forme de chape, d'enduit, de mortier ou de colle.

4. Dispositif de chauffage électrique de grande surface (1) selon la revendication 3, **caractérisé par** des contacts (4) destinés à l'alimentation d'un courant surfacique.

5. Dispositif de chauffage électrique de grande surface (1) selon la revendication 4, **caractérisé en ce que** les contacts (4) sont conçus de telle sorte qu'il en résulte un courant surfacique approximativement homogène.

6. Dispositif de chauffage électrique de grande surface (1) selon l'une des revendications 4 ou 5, **caractérisé en ce que** les contacts (4) comportent plusieurs lames métalliques qui sont approximativement parallèles les unes aux autres.

7. Dispositif de chauffage électrique de grande surface (1) selon l'une des revendications 3 à 6, **caractérisé en ce que** le matériau selon l'invention à l'état pris et sec présente une résistance p électrique spécifique égale à au moins 10⁻³ Ω*cm, de préférence une résistance p électrique spécifique égale à au moins 10⁻² Ω*cm, en particulier une résistance p électrique spécifique égale à au moins ou supérieure à 10⁻¹ Ω*cm, ou voire une résistance p électrique spécifique égale ou supérieure à 1 Ω*cm, et/ou une résistance p électrique spécifique de maximum 10⁴ Ω*cm, par exemple une résistance p électrique spécifique de tout au plus 10³ Ω*cm, en particulier une résistance p électrique spécifique égale ou inférieure à 10² Ω*cm, ou voire une résistance p électrique spécifique égale ou inférieure à 10 Ω*cm.

8. Dispositif de chauffage électrique de grande surface (1) selon l'une des revendications 3 à 7, **caractérisé en ce qu'**un treillis d'armature est inséré dans le mortier de chauffage, par exemple un tissu de soie de verre, de préférence un tissu comportant des fibres entrelacées électriquement conductrices.

9. Dispositif de chauffage électrique de grande surface (1) selon l'une des revendication 3 à 8, **caractérisé en ce qu'**il est réalisé sous forme de panneau.

10. Dispositif de chauffage électrique de grande surface (1) selon l'une des revendications 3 à 9, en ce qu'un courant surfacique est alimenté dans une couche de chauffage de surface (3) qui est séparée par une couche électriquement isolante (74, 80) d'une deuxième couche de chauffage de surface ou d'une couche électriquement conductrice (74, 79), **caractérisé en ce qu'**un potentiel dans la couche de chauffage de surface conduisant le courant surfacique sert de pôle pour au moins une ligne de raccordement (76, 77) d'un consommateur (à basse tension) électrique, par exemple d'une lampe (78) ou de tout autre quelconque consommateur (à basse tension) bipolaire électrique.

11. Dispositif de chauffage électrique de grande surface (1) selon l'une des revendications 3 à 10, **caractérisé en ce que** des résines de polyuréthane sont ajoutées au matériau pour la fabrication des couches de chauffage pour le durcissement ultérieur thermique.
